# EUROPEAN PATENT APPLICATION

(11) **EP 4 094 866 A1**
(43) Date of publication of application: **30.11.2022**
(21) Application number: 21176446.9
(22) Date of filing: 28.05.2021
(51) Int. Cl.: B22D 18/02, B01D 45/08, B22D 18/06, B22D 27/15

(54) **SEPARATOR FOR A VACUUM ASSISTED HIGH PRESSURE DIE CASTING SYSTEM**

(71) Applicant: Nemak, S.A.B. de C.V., 66017 García, Nuevo León (MX)
(72) Inventor: Yalçin Dogan, 35140 Karabaglar/Izmir (TR)
(74) Representative: Cohausz & Florack

(57) **Abstract**

The invention inter alia pertains to a separator for a vacuum assisted die casting system, the separator (1) comprising an inflow (2) for a gas (8) to be cleaned, an outflow (4) for the cleaned gas (8) and a separation chamber (6) between the inflow (2) and the outflow (4) for cleaning the gas, wherein the separation chamber (6) comprises one or more obstacles (12, 14, 16) in the flow path from the inflow (2) to the outflow (3) for separating particles (10) from the gas (8), wherein the one or more obstacles (12, 14, 16) comprise a first plate (12) being arranged in the direct flow path of the gas entering the separation chamber (6) via the inflow (2) and being arranged at an angle (α) compared to the direction (A) of the flow path of the gas (8) entering the separation chamber (6) via the inflow (2) such that the particles (10) are at least in part collected at a bottom portion (18) of the separation chamber (6).

## Description

The invention pertains to a separator for a vacuum assisted high pressure die casting system, a vacuum assisted high pressure die casting system and a use of a separator.

Die casting or high pressure die casting is a well-known metal casting process, in which molten metal is forced under high pressure into a mold cavity. The mold cavity is typically created using two mold halves (or more) which have been machined into shape for the cavity. Typical materials for die castings are non-ferrous metals, such as aluminum or an aluminum alloy. During the casting process, the corresponding casting material is introduced into the casting mold with the desired contours at high speed and pressure and is allowed to solidify there. After solidification of the molten metal in the cavity, the mold is opened by opening the mold and the finished cast component is ejected by means of ejectors.

Die casting machines are suitable for the production of metallic castings such as engine blocks. The casting equipment and the metal dies represent large capital costs so that this process is typically used for high-volume productions. Generally, for a casting process, die castings are considered to have a very good surface finish and dimensional consistency.

Specifically for the automotive industry, certain requirements are placed on the quality of the cast parts. In a conventional die casting process, even if the mold is well vented, there is a risk of air or gas inclusions in the melt, which can lead to undesirable porosity in the casting, which in turn can lead to a deterioration of the quality in particular with respect to processed surfaces and threaded holes. The casting may therefore no longer be able to reliably meet the high requirements demanded in particular for automotive construction.

To eliminate the above issues, a vacuum-assisted high-pressure die casting can be used. This technique, also known simply as vacuum high pressure die casting (VHPDC), typically utilizes a vacuum pump in order to remove air and gases from the die cavity and metal delivery system before and/or during the metal injection. This allows to further reduce the porosity and improves the surface finish.

In order to carry out the vacuum high pressure die casting process, it is necessary that the die casting machine is provided with powerful vacuum equipment (in particular a powerful vacuum pump and good vacuum regulation). A flow channel is provided in the casting mold leading from the cavity into a gas line, which is ultimately connected to a vacuum pump. The fluidic connection between the cavity and the vacuum pump can typically be opened and closed by a valve.

A problem of such a vacuum high pressure die casting process is that, when the gas atmosphere is removed from the cavity of the mold, some of the casting material present in the cavity, as well as lubricant and release agent residues are also drawn out of the cavity and can enter the valve and the vacuum pump and can consequently lead to constrictions in the vacuum lines, valves and pumps and, in the worst case, to a clogging thereof. This may ultimately damage the valves or pumps so that they may need to be repaired or replaced.

While it may be one option to employ a filter in the flow lines, it has been shown that the proportion of casting material extracted from the cavity with the gas atmosphere is so high that conventional filters become clogged very quickly and correspondingly have to be replaced quite frequently. This results in undesirably frequent interruptions in operation leading to undesired production downtime.

Even if other kinds of separators are provided, they still are provided with additional filters or particle retainers, which have the problem of filling up over time and becoming clogged, again resulting in casting errors so that it is necessary to regularly clean or replace them over time.

It is therefore on object of the present invention to provide a separator for a vacuum assisted high pressure die casting system, a vacuum assisted high pressure die casting system and a use of a separator, which has a simple design and reduces the above identified drawbacks, that is to avoid poor quality parts due to porosity defects and to extend the life of the vacuum pumps and valves while at the same time avoiding undesired production downtimes due to maintenance of the separator.

The above identified object is solved according to a first aspect by a separator for a vacuum assisted high pressure die casting system, the separator comprising:
- an inflow for a gas to be cleaned;
- an outflow for the cleaned gas; and
- a separation chamber between the inflow and the outflow for cleaning the gas; wherein the separation chamber comprises one or more obstacles in the flow path from the inflow to the outflow for separating particles from the gas, wherein the one or more obstacles comprise a first plate being arranged in the direct flow path of the gas entering the separation chamber via the inflow and being arranged at an angle compared to the direction of the flow path of the gas entering the separation chamber via the inflow such that the particles are at least in part collected at a bottom portion of the separation chamber.

According to a second aspect of the invention, the object is also solved by a vacuum assisted high pressure die casting system comprising
- a mold for vacuum assisted high pressure die casting;
- a vacuum pump connected to the die via a vacuum valve;
- a separator according to the first aspect arranged between the die and the vacuum valve.

According to a third aspect of the invention, the object is also solved by a use of a separator according to the first aspect for cleaning air in a vacuum assisted high pressure die casting system.

As already described above, the vacuum assisted high pressure die casting (VHPDC) system may in particular be used for casting aluminum parts, such as motor blocks or parts of electric motors. The composition of the gas to be cleaned depends on the gas evacuated from the cavity of the mold of the casting system. Thus, the gas may generally be air or another gas being evacuated from the cavity of the mold. As described above, the gas to be cleaned typically comprises particles in the form of e.g. aluminum particles. The gas may also comprise further undesired impurities such as dust or droplets from the used lubricant and/or release agent. These impurities may also be separated at least partially from the gas by the described separator. The gas together with such impurities is fed to the separator and specifically into the separation chamber via an inflow.

According to the invention, the separation chamber comprises one or more obstacles in the flow path from the inflow to the outflow for separating particles from the gas. More specifically, the one or more obstacles at least comprise a first plate, which is arranged in the direct flow path of the gas entering the separation chamber via the inflow. Thus, the gas entering the separation chamber together with the impurities is directly guided against said first plate. Moreover, the first plate is arranged at an angle compared to the direction of the flow path of the gas entering the separation chamber via the inflow. Overall, the first plate is arranged such in the flow path and at an angle that the particles in the gas are at least in part separated from the gas and collected at a bottom portion of the separation chamber. Thus, the first plate can be considered to be a deflector plate or an impact plate for the particles. At least a part of the particles can be directed out of the gas flow and are not be able to follow the gas flow anymore and eventually fall to the bottom portion of the separation chamber, while the inflowing gas will be able to go around the first plate, as will be described in more detail below.

The first plate (and also any additional plate, such as the second or the third plate mentioned further below) may be generally flat or planar plates. The plates may essentially cross the whole separation chamber in one direction (e.g. the whole width of the separation chamber), but only a part of the separation chamber in the second direction (e.g. only a part of the length of the separation chamber).

Preferably and as will be described further below, the obstacles in the separation chamber can be designed as a plate-construction, i.e. with only (e.g. flat) plates, yielding a particularly simple but effective design.

The cleaned gas can eventually be provided to the outflow of the separator. The particles collected at the bottom of the separation chamber can easily be discharged without any or larger production downtimes, as will also be described in more detail below.

It is noted that terms such as "bottom", "top", "upwards", "downwards" or "side" refer to the orientation of the device when installed or in use as intended.

The approach described above is in particular advantageous compared to alternative approaches described at the beginning. For instance, no classical filter which clogs over time is required. Rather, the air flow is not interrupted and no spare or exchange parts are required as long as the described separator is not physically damaged.

Also in contrast to various other separators, such as cyclones utilizing centrifugal forces for separating the particles and typically requiring a different designs for different flow velocities and particles sizes, the described approach can be used over a wide variety of flow speeds and particles sizes. This is in particular advantageous for vacuum assisted high pressure die casting repeatedly ramping up and down the gas flow speeds with the casting process.

Rather, the described separator may be considered as a type of inertial separator in the sense that the particles in the gas flow are deflected by the first plate downwards, while the gas flow is guided around the first plate such the particles are not able to follow the gas flow and separate therefrom. This is because the particles in the gas flow impacting on the angled first plate will be deflected stronger than the airflow around the plate.

As a result, the described separator prevents the (e.g. aluminum) particles from blocking the vacuum valves, lines and pumps in high pressure die casting ensuring the air flow while filtering the respective particles. The separator reduces the production downtime (due to a lack of the need of exchanging or extensive cleaning of parts), reduces the number of poor quality parts (e.g. excessive porosity on processed surfaces and threaded holes) and extends the life of the vacuum valves and pumps.

According to an exemplary embodiment of the different aspects of the invention, the separator is a filter-less separator. While it is generally possible to combine the described separator with further separators or filters, it has been found out that the described separator is able to sufficiently separate the particles from the gas flow so that it can be used in a vacuum assisted dies casting process without the need for any additional filter. This minimizes any potential further maintenance (e.g. exchange or cleaning) of such additional filter further reducing costs and production downtime.

According to an exemplary embodiment of the different aspects of the invention, the inflow is arranged at a side wall of the separation chamber and/or the outflow is located at a top of the separation chamber. For instance, the inflow is arranged in an upper half of the separation chamber. This design has the advantage that sufficient room is provided at the bottom of the separation chamber for reliably collecting the particles at the bottom portion of the separation chamber. Moreover, providing the outflow at the top of the separation chamber reduces the risk of particles being inadvertently dragged out together with the outgoing gas flow.

According to an exemplary embodiment of the different aspects of the invention, the separation chamber comprises an opening for discharging the particles collected at the bottom portion of the separation chamber. The opening is preferably located at the bottom of the separation chamber. For instance, the opening may be located at the lowest point of the separation chamber. Furthermore, the discharge opening of the separation chamber is preferably closable, in particular via a screw mechanism. However, other opening/closing mechanisms, such as a (e.g. hinged or sliding) hatch, are possible as well. A threaded hole or screw hole has the advantage that a screw can be used to open and close the opening quickly and easily. Also, using a screw hole has the advantage that it is comparably small (e.g. less than 30 or 20 mm) and may allow to open and discharge the collected particles at any time.

According to an exemplary embodiment of the different aspects of the invention, the bottom of the separation chamber comprises one or more inclined surfaces for directing the collected particles at the bottom portion towards the opening of the separation chamber. This design further facilitates the discharge of the collected particles from the bottom of the separation chamber so that all or nearly all collected particles are discharged by simply opening the discharge opening.

According to an exemplary embodiment of the different aspects of the invention, the first plate is arranged at an angle larger than 30°, preferably larger than 45°, further preferably around 55° compared to the direction of the flow path of the gas entering the separation chamber via the inflow (with 0° being parallel to the direction gas flow and 90° being perpendicular to the direction of the gas flow). Thus, the airflow is guided by said angle into a direction roughly corresponding to the direction of the extension of the first plate. The particles of the airflow, however, are deflected stronger, e.g. roughly perpendicular to the direction of the entering gas flow in a basically downward direction towards the bottom portion of the separation chamber.

Thus, in an example, the first plate is arranged such that it directs the gas entering the separation chamber via the inflow downwards towards the bottom portion of the separation chamber. However, as explained above, the gas entering the separation chamber via the inflow is only directed downwards to a certain degree while in particular the particles are redirected to a larger degree, so that the particles are effectively separated.

In an example, the first plate is arranged such that it forces gas entering the separation chamber via the inflow to flow around a bottom portion of the first plate. For instance, the gas flow will be defected downwards (to a certain degree) and at the (lower) end of the first plate the gas will be dragged upwards again towards the outflow of the separation chamber.

The gas flow described above can be achieved particularly effective by arranging the outflow facing a side of the first plate facing away from the inflow, i.e. behind the first plate viewed from the perspective of the inflow, so that the gas flow is dragged around and behind the first plate.

Furthermore, the fist plate advantageously extends (downwards) from a (side) wall of the separation chamber on the same side as the inflow. This prevents gas entering the separation chamber via the inflow to flow around a top portion of the first plate.

According to an exemplary embodiment of the different aspects of the invention, the one or more obstacles comprise a second plate. A second plate can be used to further direct the flow of the gas in the separation chamber prevent an undesired gas flow and further avoid particles from reaching the outflow.

Preferably, the second plate faces a side of the first plate facing away from the inflow (i.e. a backside of the first plate). In other words, the second plate is arranged somewhere behind the first plate viewed from the perspective of the inflow.

It is further preferred that the second plate is arranged at an angle compared to the direction of the flow path of the gas entering the separation chamber via the inflow and/or arranged transverse, in particular substantially perpendicular, to the first plate. For instance, this may be realized by the second plate extending (e.g. downwards) from a (side) wall of the separation chamber opposite the inflow. More specifically, in an embodiment the first plate and the second plate may be arranged such that they form a passageway between them. It has been found that a second plate arranged in the described manner can advantageously guide the gas flow after it has moved around the bottom part of the first plate and can in particular further prevent particles from being inadvertently dragged out together with the outgoing gas flow.

According to an exemplary embodiment of the different aspects of the invention, the one or more obstacles comprise a third plate. A third plate can be used to further direct the flow of the gas in the separation chamber, prevent an undesired gas flow and further avoid particles from reaching the outflow. However, it is noted that it may also be possible, in an embodiment, that the obstacles of the separation chamber do not comprise a second plate as described above, but only the first and a third plate as described in the following (the latter may then be referred to as the second plate). Nevertheless, this further plate will still be referred to as the third plate in the following.

Like the second plate, the third plate may also face a side (i.e. backside) of the first plate facing away from the inflow, i.e. in other words, the second plate is arranged behind the first plate viewed from the perspective of the inflow.

Preferably, the third plate is arranged at an angle compared to the first plate and/or to the second plate and/or to the flow path of the gas entering the separation chamber via the inflow. For instance, the third plate may be arranged transverse, in particular substantially perpendicular, to the flow path of the gas entering the separation chamber via the inflow. The third plate may in particular extend vertically along the height of the separation chamber. For instance, the third plate may extend (e.g. straight downwards) from a top of the separation chamber. Thus, in an embodiment the third plate and the second plate may be arranged such that they form a passageway between them. It has been found that a third plate arranged in the described manner can advantageously guide the gas flow after it has moved around the bottom part of the first plate and can in particular further prevent particles from being inadvertently dragged out together with the outgoing gas flow.

While the obstacles of the separation chamber may only comprise one or more of the plates described above, which allows for a particular simple design and production, the separation chamber may in various embodiments also comprise additional obstacles and in particular further plates.

In a preferred embodiment, one or more of the plates described above (preferably all of the first, second and third plate, if present) are arranged in the upper half of the separation chamber. The lower part of the separation chamber can be used as a retainer for collecting separated particles and keeping a certain distance between the gas flow and the separated particles.

According to an exemplary embodiment of the different aspects of the invention, the height of the separation chamber is at most 300 mm, preferably at most 200 mm and/or wherein the width and/or length of the separation chamber is at most 100 mm, preferably at most 80 mm. It has been found that the separation chamber (and thus also the separator as a whole) can constructed in a very compact design, specifically due to the above described design which allows a separation of the particles from the gas flow in a very restricted and compact space.

Further advantageous exemplary embodiments of the invention will be disclosed in the following detailed description of an exemplary embodiment of the present invention, particularly in connection with the figures. However, while the figures are intended for the purpose of clarification and for disclosing further preferred features, the figures only reflect the general concept of the present invention by way of an example. In particular, features included in the figures are in no way intended to be considered a necessary part of the present invention.
- Fig. 1: shows a schematic perspective partially transparent view of an embodiment of a separator according to the invention;
- Fig. 2: shows a schematic cross section along the length of the separator of Fig. 1;
- Fig. 3: shows a schematic cross section along the width of the separator of Fig. 1; and
- Fig. 4: shows a schematic cross section along the length of the separator of Fig. 1 illustrating the gas flow and separation of particles therefrom,

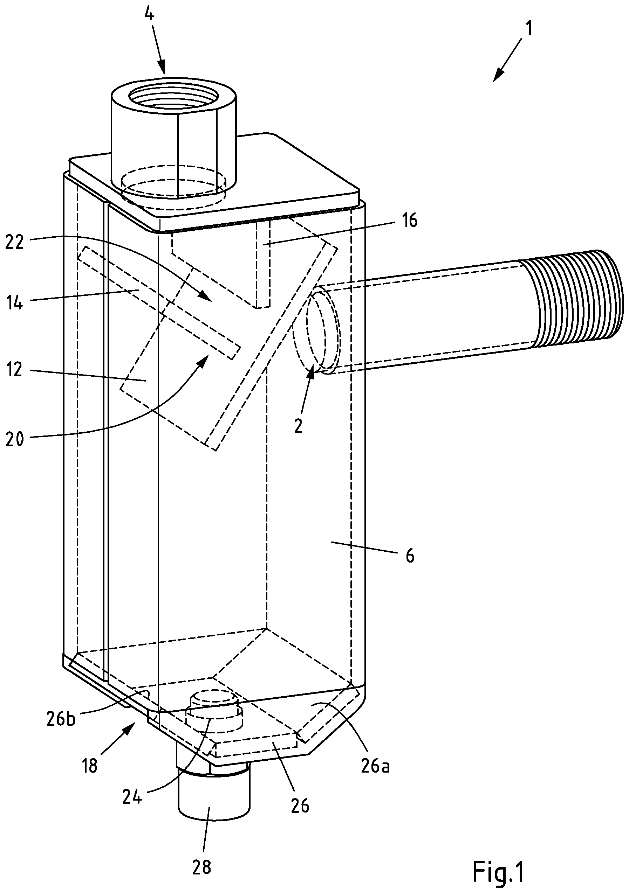

The exemplary embodiment will be described with reference to all of Fig. 1 to 4 showing the same embodiment in different views or perspectives.

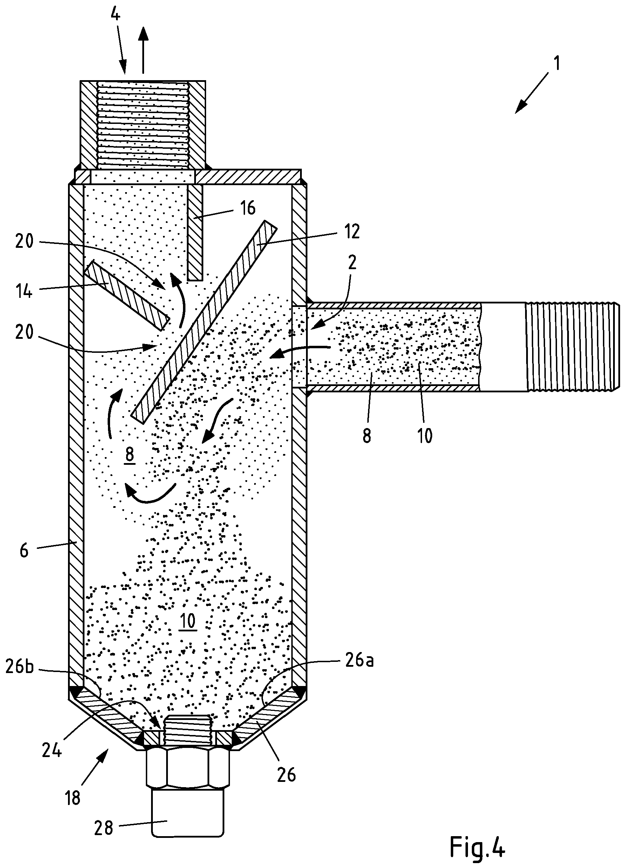

Figs. 1 to 4 show an exemplary embodiment of a separator 1 with a separation chamber 6 for a vacuum assisted high pressure die casting system (not shown). The separator comprises an inflow 2 on a side wall of the separation chamber 6 for a gas, which is in this example air, to be cleaned. The inflow is connected to the mold to be evacuated (mold side). The air to be cleaned comprising particles 10 in the air flow 8 enters the separator 1 via the inflow 2, as illustrated in Fig. 4. The particles may in particular be aluminum particles specifically in case the separator 1 is connected to the cavity of an aluminum high pressure die casting system (not shown).

The separator 1 further comprises an outflow 4 at a top of the separation chamber 5 for the cleaned air 8, carrying no or a substantially reduced amount of particles 10, as also illustrated in Fig. 4. The outflow 4is connected to a vacuum vent or a vacuum pump (vacuum side).

Between the inflow 2 and the outflow 4, the separator 1 further comprises the separation chamber 6 for cleaning the air. The details of cleaning the air by means of the separation chamber 6 will be described in detail below.

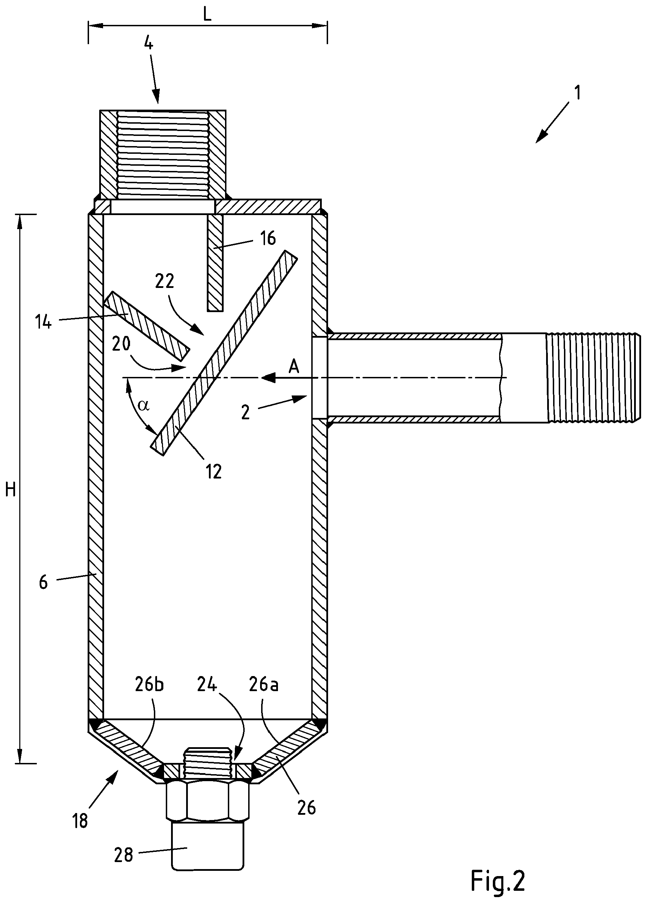

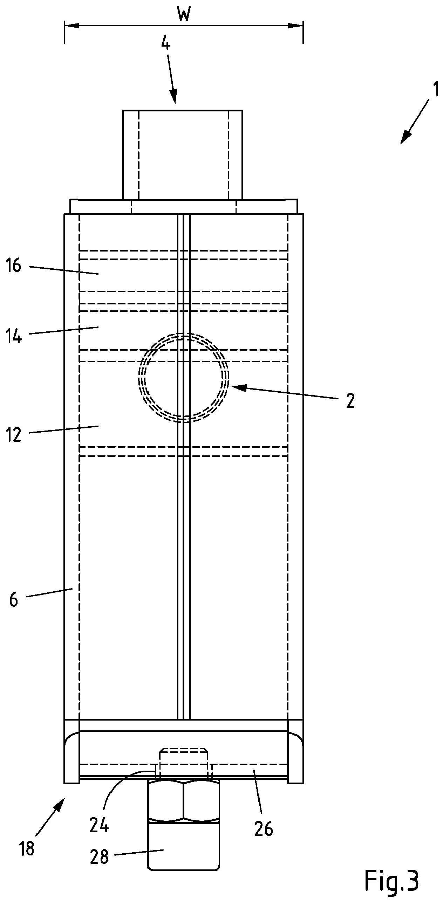

As illustrated in Fig. 1 to 4, the separation chamber 6 comprises (in the illustrated example three) obstacles 12, 14, 16 in the flow path from the inflow 2 to the outflow 4 for separating particles 10 from the air 8. As can be seen in Fig. 1 and 3, each of the plates 12, 14, 16 span across the whole width W of the separation chamber 6. However, it is noted that the invention may also be realized with less or more obstacles. In any case, the obstacles at least comprise a first plate 12 being arranged in the direct flow path of the air 8 entering the separation chamber 6 via the inflow 2. The flow path of the entering air 8 or the initial direction thereof is illustrated by arrow A as shown in Fig. 2. A first side of the first plate 12 faces the inflow 2, while the outflow 4 is arranged facing a second (back) side of the first plate 12 facing away from the inflow 2. The first plate 12 is also arranged at an angle compared to the direction of said flow path of the air entering the separation chamber via the inflow. More specifically, the first plate 12 is arranged at an angle α of around 55° compared to the direction A of the flow path of the air 8 entering the separation chamber 6 via the inflow 2. The angle α is also illustrated in Fig. 2. As a result, the first plate 12 is arranged such that it directs the air 8 entering the separation chamber 6 via the inflow 2 downwards towards a bottom portion 18 of the separation chamber 6 and forces the air 8 to flow around a bottom portion of the first plate 12, as illustrated in Fig. 4.

In effect, the plates 12, 14, 16 and in particular the first plate 12 are arranged such that the particles 10 are at least in part collected at the bottom portion 18 of the separation chamber 6. This process is schematically illustrated in Fig. 4. As shown, the particles 10 are deflected by the first plate 12 basically straight downwards, while the air flow 8 is directed towards and around a bottom portion of the first plate 12. Thus, the particles 10 cannot follow the air flow 8 anymore and fall towards the bottom portion 18 of the separation chamber 6.

To further avoid particles 10 from being dragged with the air flow 8 towards the outflow 4, the air flow 8 is then directed through a passage 20 between the first plate 12 and a second plate 14 and then through a passage 22 between the second plate 14 and a third plate 16. Both, the second plate 14 and the third plate 16 are facing a side of the first plate 12 facing away from the inflow 2, i.e. the backside of the first plate 12. The second plate 14 extends from a wall of the separation chamber 6 opposite the inflow 2, while the third plate 16 extends from the top of the separation chamber 6 downwards. In the embodiment shown in the figures, the second plate 14 and the third plate 16 are both arranged at an angle compared to the direction A of the flow path of the air entering the separation chamber 6 via the inflow 2. More specifically, the second plate 14 is arranged substantially perpendicular to the first plate 12, while the third plate 16 is arranged substantially perpendicular to the flow path A of the air entering the separation chamber 6 via the inflow 2 (i.e. substantially vertical). As a result the first plate 12 and the second plate 14 are arranged such that they form a passageway 20 between them, while the third plate 16 and the second plate 14 are arranged such that they form a passageway 22 between them. Thereafter, the cleaned air exits the separation chamber 6 and the separator 1 via the outflow 4.

As illustrated, there is no need for any additional filters, which need to be cleaned or exchanged regularly. Rather, the separator 1 can be employed as a filter-less separator. The air flow 8 exiting the separator 8 is in particular sufficiently clean to be used in a vacuum assisted high pressure die casting system.

It is only necessary to regularly discharge the particles 10 collected at the bottom of the separation chamber 6. For this, the separation chamber 6 comprises an opening 24 located at the bottom 26 of the separation chamber 6 for discharging the particles 10 collected at the bottom portion 18 of the separation chamber 6. The bottom 26 of the separation chamber 6 comprises two inclined surfaces 26a, 26b for directing particles 10 collected in the bottom portion 18 towards the opening 24 of the separation chamber 6. The opening 24 of the separation chamber is in this case provided with an inner thread, so that the opening 24 is closable by means of a screw 28. For discharging the particles it is only required to briefly remove and insert screw 28.

Not only is the described separator 1 practically maintenance-free in the sense that no parts need to be exchanged or removed and extensively cleaned, the separator can also be built very compact. More specifically, the height H of the separation chamber 6 (see Fig. 2) does not need to be more than 300 mm or even 200 mm. Also, the width W (see Fig. 3) and length L (see Fig. 2) of the separation chamber 6 does not need to be more than 100 mm or even 80 mm.

The separator 1 as described above is particularly suited to be employed in a vacuum assisted high pressure die casting system comprising a mold for vacuum assisted high pressure die casting and a vacuum pump connected to the die via a vacuum valve. The separator 1 is then advantageously arranged between the die and the vacuum valve.

The invention has thus the advantage that (e.g. aluminum) particles are prevented from blocking vacuum valves in HPDC, which reduces the number of poor quality parts and extends the life of the vacuum valve and pump. Advantageously, the air flow is not interrupted, no spare parts are required and no change is required as long as the separator is not physically damaged, which reduces any production downtime due to maintenance.

This solution has been developed under the Nemak Izmir Ar-Ge merkezi initiative.

## Claims

1. A separator for a vacuum assisted high pressure die casting system, the separator (1) comprising:
- an inflow (2) for a gas (8) to be cleaned;
- an outflow (4) for the cleaned gas (8); and
- a separation chamber (6) between the inflow (2) and the outflow (4) for cleaning the gas;
wherein the separation chamber (6) comprises one or more obstacles (12, 14, 16) in the flow path from the inflow (2) to the outflow (3) for separating particles (10) from the gas (8), wherein the one or more obstacles (12, 14, 16) comprise a first plate (12) being arranged in the direct flow path of the gas entering the separation chamber (6) via the inflow (2) and being arranged at an angle (α) compared to the direction (A) of the flow path of the gas (8) entering the separation chamber (6) via the inflow (2) such that the particles (10) are at least in part collected at a bottom portion (18) of the separation chamber (6).

2. The separator of claim 1, wherein the separator (1) is a filter-less separator.

3. The separator of claims 1 or 2, wherein the inflow (2) is arranged at a side wall of the separation chamber (6) and/or wherein the outflow (4) is located at a top of the separation chamber (6).

4. The separator of any of claims 1 to 3, wherein the separation chamber (6) comprises an opening (24), preferably located at the bottom (26) of the separation chamber (6), for discharging the particles (10) collected at the bottom portion (18) of the separation chamber (6), wherein the opening (24) of the separation chamber (6) is preferably closable, in particular via a screw mechanism.

5. The separator of claim 4, wherein the bottom (26) of the separation chamber (6) comprises one or more inclined surfaces (26a, 26b) for directing the collected particles (10) at the bottom portion (18) towards the opening (24) of the separation chamber (6).

6. The separator of any of claims 1 to 5, wherein one or more of
- the first plate (12) is arranged at an angle (α) larger than 30°, preferably larger than 45°, further preferably around 55° compared to the direction (A) of the flow path of the gas entering the separation chamber (6) via the inflow (2);
- the first plate (12) is arranged such that it directs the gas (8) entering the separation chamber (6) via the inflow (2) downwards towards the bottom portion (18) of the separation chamber (6);
- the first plate (12) is arranged such that it forces gas (8) entering the separation chamber (6) via the inflow (2) to flow around a bottom portion of the first plate (12); and/or
- the outflow (4) faces a side of the first plate (12) facing away from the inflow (2).

7. The separator of claim 6, wherein the one or more obstacles (12, 14, 16) comprise a second plate (14), wherein one or more of
- the second plate (14) faces a side of the first plate (12) facing away from the inflow (2);
- the second plate (14) is arranged at an angle compared to the direction (A) of the flow path of the gas (8) entering the separation chamber (6) via the inflow (2);
- the second plate (14) is arrange transverse, in particular substantially perpendicular, to the first plate (12);
- the second plate (14) extends from a wall of the separation chamber (6) opposite the inflow (2); and/or
- the first plate (12) and the second plate (14) are arranged such that they form a passageway (20) between them.

8. The separator of claim 7, wherein the one or more obstacles (12, 14, 16) comprise a third plate (16), wherein one or more of
- the third plate (16) faces a side of the first plate (12) facing away from the inflow (2);
- the third plate (16) is arranged at an angle compared to the first plate (12) and/or the second plate (14);
- the third plate (16) is arranged transverse, in particular substantially perpendicular, to the flow path of the gas (8) entering the separation chamber (6) via the inflow (2);
- the third plate (16) and the second plate (14) are arranged such that they form a passageway (22) between them; and/or
- the third plate (16) extends from a top of the separation chamber (6).

9. The separator of any of the claims 1 to 8, wherein the height (H) of the separation chamber (6) is at most 300 mm, preferably at most 200 mm and/or wherein the width (W) and/or length (L) of the separation chamber (6) is at most 100 mm, preferably at most 80 mm.

10. Vacuum assisted high pressure die casting system comprising
- a mold for vacuum assisted high pressure die casting;
- a vacuum pump connected to the die via a vacuum valve;
- a separator (1) according to any of the claims 1 to 9 arranged between the die and the vacuum valve.

11. Use of a separator (1) of any of claims 1 to 9 for cleaning air in a vacuum assisted high pressure die casting system.
